# EUROPÄISCHE PATENTSCHRIFT

(11) **EP 3 685 157 B1**
(45) Veröffentlichungstag und Bekanntmachung des Hinweises auf die Patenterteilung: **25.12.2024**
(21) Anmeldenummer: 18756394.5
(22) Anmeldetag: 09.08.2018
(51) Int. Cl.: G01N 31/22, G01N 21/78

(54) **VERFAHREN ZUR BESTIMMUNG VON PHOSPHAT**
METHOD FOR DETERMINING PHOSPHATE
PROCEDE POUR DETERMINER PHOSPHATE

(30) Priorität: 20.09.2017 DE 102017121797
(43) Veröffentlichungstag der Anmeldung: 29.07.2020
(73) Patentinhaber: Hach Lange GmbH, 14163 Berlin (DE)
(72) Erfinder: GOLITZ, Andreas, 47445 Moers (DE); JONAK, Andreas, 40670 Meerbusch (DE); KUSSMANN, Michael, 40476 Düsseldorf (DE); LEYER, Axel, 41199 Mönchengladbach (DE); SCHWENK, Andreas, 41379 Brüggen (DE); HAHN, Markus, 47906 Kempen (DE)
(74) Vertreter: terpatent PartGmbB
(86) Internationale Anmeldenummer: PCT/EP2018/071663
(87) Internationale Veröffentlichungsnummer: WO 2019/057389

(56) Entgegenhaltungen:
- EP-A2- 0 315 449
- US-A- 3 796 543
- US-A- 4 599 316

## Beschreibung

Die vorliegende Erfindung betrifft ein Verfahren zur Bestimmung von Phosphat in einer Wasserprobe .

Seit vielen Jahren wird versucht, die Phosphatbelastung der Umwelt, insbesondere aus Abwässern, zu reduzieren.

Nach der Abwasserverordnung müssen Kläranlagen in einer Ausbaugröße über 10.000 Einwohner eine Ablaufkonzentration des Phosphats von maximal 2 mg/l einhalten. Bei einer Ausbaugröße über 100.000 Einwohnern liegt dieser Wert sogar bei 1 mg/l.

Notwendig ist daher eine exakte Bestimmung des Phosphatgehaltes.

Ein übliches Verfahren zur Bestimmung von Phosphat in Abwässern ist die photometrische Bestimmung mit einem Molybdat-Vanadat-Reagenz.

DE 27 28 706 beschreibt ein Verfahren zur automatischen Phosphatbestimmung. Als Reagenz wird dabei eine Lösung eingesetzt, die pro Liter 25 g Ammoniumheptamolybdat, 1 g Ammoniummonovanadat, 56 ml konzentrierte Schwefelsäure und 1 g Natriumchlorid enthält.

Die Molybdat- und Vanadat-Komponenten bilden zusammen mit Phosphat einen gelbgefärbten Komplex. Es wird vermutet, dass folgende Reaktion abläuft:

(NH₄)₆Mo₇O₂₄ + NH₄VO₃ + PO₄³⁻ 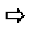 (NH₄)₃PO₄ x NH₄VO₃ x 16MoO₃

Das Gleichgewicht liegt im Sauren (pH < 2) auf der rechten Seite der Gleichung.

In diesem Verfahren wird eine Abwasserprobe photometrisch vermessen, das Reagenz zugesetzt und nach einer Wartezeit von 4 bis 5 Minuten eine zweite Messung durchgeführt.

Aus der Gelbfärbung kann mit Hilfe einer Standardlösung die Phosphatkonzentration bestimmt werden; dabei ist die Intensität der gelben Farbe proportional zur Phosphatkonzentration, wenn die Messlösung stark sauer ist.

Das Messverfahren wird teilweise auch als Molybdän-Gelbmethode bezeichnet siehe z.B. WO 2016/133882 A1.

Varianten des Verfahrens sind ebenfalls bekannt, siehe beispielsweise US 4,544,639 A und US 4,599,316 A.

Obwohl das Verfahren grundsätzlich lange bekannt ist, besteht weiterhin Bedarf nach einer exakten Phosphatbestimmung, die es unter anderem auch erlaubt, kleine Phosphatkonzentrationen zuverlässig zu messen.

Aufgabe der vorliegenden Erfindung war es, ein Verfahren zur Phosphatbestimmung bereitzustellen, dass einige der Nachteile des Standes der Technik überwindet.

Gelöst wird die Aufgabe durch ein Verfahren zur Phosphatbestimmung in einer Wasserprobe, umfassend die Schritte:
a) Bereitstellen einer Wasserprobe,
b) Zugabe einer Säure, derart, dass die Konzentration der Säure in der Wasserprobe mindestens 0,5 Gew.-% beträgt,
c) erste photometrische Messung der Wasserproben-Lösung,
d) Zugabe einer Färbungskomponente in die photometrische Wasserproben-Lösung,
e) zweite photometrische Messung, und
f) Berechnung der Phosphatkonzentration aus der Differenz der ersten und der zweiten photometrischen Messung.

Das erfindungsgemäße Verfahren ist in Anspruch 1 definiert.

Erfindungsgemäß wird also das Färbungsreagenz aufgeteilt, indem zuerst eine Säure zugesetzt wird, bevor eine erste photometrische Messung erfolgt, sodann die Zugabe der Färbungskomponente in dieselbe Wasserproben-Lösung erfolgt und die zweite photometrische Messung durchführt wird.

Das Färbungsreagenz ist eine Kombination aus einer Färbungskomponente und einer Säure, wobei die Färbungskomponente mit Phosphat eine Färbung herbeiführt.

Es hat sich überraschenderweise gezeigt, dass bei Wasserproben häufig durch die Zugabe einer Säure (ohne Zugabe einer Färbungskomponente) eine Entfärbung bzw. Änderung der Farbintensität auftritt, die dann zu einer Verfälschung der Messung führt, wodurch zu niedrige Phosphatkonzentrationen ermittelt werden.

Während also im Stand der Technik beispielsweise mit Färbungsreagenzlösungen gearbeitet wird, die Säurekonzentration im Bereich von mindestens 5 Gew.-%, häufig auch 10 - 30 Gew.-% aufweisen, um Säurekonzentrationen im Bereich von 0,6 oder 0,7 % in der Wasserprobe zu erreichen, wird erfindungsgemäß im Verfahren die Säurezugabe zuerst durchführt, um eine erste photometrische Messung der angesäuerten Lösung durchführen zu können.

Bei der ersten Säurezugabe wird so viel Säure zugesetzt, dass die Konzentration der Säure in der Wasserprobe mindestens 0,5 Gew.-%, bevorzugt mindestens 0,7 Gew.-%, noch mehr bevorzugt mindestens 1 Gew.-% oder mindestens 2 Gew.-% oder mindestens 3 Gew.-% Säure beträgt, 1 Gew.-% bedeutet, dass 99 Gewichtsteile der Wasserprobe mit 1 Gewichtsteilen der konzentrierten Säure versetzt werden. Natürlich kann auch eine geringer konzentrierte Säure eingesetzt werden, die dann in größerer Menge verwendet wird.

Die erste photometrische Messung nach der Säurezugabe kann auch als Nullpunkt-Messung betrachtet werden.

Die Färbungskomponente enthält noch weitere Säure, die für die Löslichkeit der Reagenzien erforderlich sein kann, allerdings liegt ihre Konzentration in der Färbungskomponente deutlich niedriger als im Stand der Technik, beispielsweise bei maximal 1% oder maximal 0,5%, bevorzugt etwa 0,2 - 0,4 Gew.-% Säure in der Wasserproben-Lösung nach der Zugabe der Färbungskomponente in die erstmalig photometrierte Wasserproben-Lösung.

Die Säurekonzentration in der Färbungskomponente selbst beträgt maximal 8 %, bevorzugt maximal 6 % und besonders bevorzugt 3 - 5 %. Es findet keine messbare pH-Wert-Verschiebung in der Wasserproben-Lösung durch die Zugabe der Färbungskomponente statt. Die Eigenfärbung der Wasserprobe wird durch den relativ kleinen Säureanteil in der Färbungskomponente nicht beeinflusst.

Es ist vorgesehen, dass durch die erste Säurezugabe zu der Wasserprobe der Säureanteil in der Wasserproben-Lösung erheblich mehr erhöht wird als durch die anschließende Zugabe der Färbungskomponente nach der ersten Photometrierung.

Das erfindungsgemäße Verfahren eignet sich insbesondere für Prozess-Analysegeräte, die eine fest im Analysegerät installierte Küvette aufweisen. Gegenüber einem Laborverfahren, in dem beispielsweise mit zwei Wasserproben-Fraktionen in zwei Messküvetten gegeneinander gemessen wird, sind in einem Prozess-Analysegerät physikalische Messfehler ausgeschlossen, da die Messküvette in der Photometer-Einheit des Analysegeräts nicht getauscht wird. Physikalische Messfehler die sich durch verschiedene Trübungen der Messküvette selbst und/oder durch nicht exakt gleiche optische Verhältnisse der beiden Messküvetten ergeben, können bei einem Prozess-Analysegerät mit einer festinstallierten Messküvette nicht auftreten.

Das Verfahren eignet sich insbesondere zur Messung in Abwasserproben, es gibt aber auch weitere Anwendungsfälle. Beispielsweise wird teilweise Industriewasser in Kühltürmen oder Dampferzeugern Phosphat zugesetzt, um als Korrosionsinhibitor zu wirken. Die Konzentration dieser Korrosionsinhibitoren muss dann regelmäßig geprüft werden.

Zur Ansäuerung der Wasserprobe sind folgende Säuren besonders geeignet:
Schwefelsäure, Salpetersäure, Salzsäure, substituierte Benzensulfonsäure, substituierte oder unsubstituierte Essigsäure oder Mischungen davon.

Die Verwendung von Schwefelsäure ist besonders bevorzugt.

Als Färbungskomponente wird erfindungsgemäß bevorzugt ein Reagenz auf Basis von Molybdat und Vanadat verwendet.

Eine geeignete Zusammensetzung ist die in der oben genannten DE-OS 27 28 706 beschriebene Zusammensetzung bezüglich der Konzentration an Molybdat und Vanadat, wobei die Säurekonzentration der Färbungskomponente kleiner ist als im Stand der Technik.

Eine besonders vorteilhafte Ausführungsform dieser Erfindung ist es, die Menge an Färbungskomponente an die erwartete Menge oder Konzentration an Phosphat anzupassen.

Die Färbungskomponente auf Basis von Molybdat-Vanadat hat eine eigene Gelbfärbung, die bei der Reaktion mit Phosphat verstärkt wird.

Werden sehr kleine Konzentrationen an Phosphat gemessen, wird das Ergebnis durch die Eigenfärbung des Reagenzes ungenau.

Im Verfahren des Standes der Technik kann die Menge an Färbungsreagenz nicht variiert werden, da eine starke Ansäuerung der Wasserprobe notwendig ist, um eine Niederschlagbildung aus der Reaktion des Färbungsreagenzes mit dem Phosphat zu vermeiden.

Beim erfindungsgemäßem Verfahren kann eine konstante Menge an Säure zugesetzt werden, aber die Färbungskomponente an die erwartete Phosphatkonzentration oder an die erwartete Menge Phosphat in der Wasserprobe angepasst werden.

Dies ist insbesondere geeignet, wenn die Messung der Phosphatkonzentration semikontinuierlich erfolgt.

Semikontinuierlich bedeutet, dass die Probennahme in festen Zeitabständen (beispielsweise alle 5 Minuten, alle 7 Minuten, alle 10 Minuten, alle 15 Minuten, alle 30 Minuten oder jede Stunde) erfolgt und die Probe dann gemessen wird.

Hierbei ist zu erwarten, dass sich die Phosphatkonzentration zwischen zwei Proben nur in einem gewissen Umfang ändert, sodass hier manuell oder automatisch die verwendete Menge an Färbungskomponente angepasst werden kann.

Eine entsprechende Steuerung der Menge der Färbungskomponente kann insbesondere auch automatisiert erfolgen.

Es ist grundsätzlich auch denkbar, eine vorhandene Wasserprobe in mehrere Teile aufzuteilen und mit unterschiedlichen Konzentrationen an Färbungskomponenten zu messen, um die an die Phosphatkonzentration am besten angepasste Menge an Färbungskomponente zu ermitteln.

Die Färbungsreaktion zwischen der Phosphat und der zugesetzten Färbungskomponente benötigt eine gewisse Reaktionszeit. Diese hängt ab von der Phosphatkonzentration und liegt typischerweise zwischen etwa 1 und 10 Minuten.

Für die photometrische Messung sind Wellenlängen zwischen 360 und 400 nm besonders gut geeignet. Insbesondere ist der Bereich von 370 bis 380 nm geeignet. Die beiden photometrischen Messungen erfolgen bei einer Phosphatbestimmung im Regelfall bei der gleichen Wellenlänge, um verlässliche Aussagen erhalten zu können.

Eine bevorzugte Zusammensetzung der Färbungskomponente ist wie folgt:
0,04 mol/L - 0,12 mol/L Molybdat (MoO₄²⁻)
0,001 mol/L- 0,01 mol/L Vanadat (VO₃⁻).

Bevorzugt wird die Färbungskomponente aus Ammoniumheptamolybdat und Ammoniummonovanadat hergestellt, aber es können grundsätzlich auch andere Salze verwendet werden.

Die Färbungskomponente kann, wie im Stand der Technik beschrieben, weitere Inhaltsstoffe (beispielsweise Salze, Tenside etc.) enthalten.

Weiterhin offenbart ist ein Kit, wie er im erfindungsgemäßen Verfahren verwendet wird. Der Kit enthält eine Säure und ein Färbungskomponente auf Basis von Molybdat und Vanadat in getrennten Behältern. Auf diese Weise kann eine entsprechende automatisierte Vorrichtung mit standardisierten Reagenzlösungen versorgt werden, die dann in einer automatisierten Vorrichtung zur Phosphatbestimmung verwendet werden könne.

Das Kit kann prinzipiell weitere Inhaltsstoffe, beispielsweise Kalibrierlösung mit standardisierten Phosphatgehalten, Nullstandards, und/oder Reinigungslösungen enthalten.

Bei dem erfindungsgemäßen Verfahren zur Phosphatbestimmung kann Phosphat in Konzentrationsbereichen bis hinunter zu etwa 0,02 mg/l bestimmt werden.

Das Verfahren wird durch die nachfolgenden Beispiele noch näher erläutert.

### Beispiel 1

Eine Wasserprobe aus dem Belebungsbecken einer kommunalen Kläranlage mit einem Volumen von 2 ml wurde filtriert und mit 0,1 ml 30%iger Schwefelsäure versetzt , so dass die Konzentration der Schwefelsäure in der Wasserprobe ca. 1.4 % betrug. Die Probe wurde mit einem Photometer bei 370 nm photometrisch gemessen und der entsprechende Wert wurde als Nullpunkt verwendet.

Anschließend erfolgte der Zusatz von 0,1 ml einer Färbungskomponente, enthaltend 30 g/l Ammoniumheptamolybdat, 2 g/l Ammoniummonovanadat und 10 ml/l 30%iger Schwefelsäure, so dass die hierdurch begründete Erhöhung der Säurekonzentration in der Wasserproben-Gesamtlösung also 0,3 % betrug. Nach einer Wartezeit von 4 Minuten wurde erneut bei 370 nm gemessen. Als Extinktion ergab sich ein Wert von 0,260. Aus dem Vergleich mit einer kalibrierten Probe konnte der Phosphatgehalt ermittelt werden.

### Vergleichsbeispiel

Die gleiche Wasserprobe wurde mit einem Färbungsreagenz versetzt, enthaltend 30 g/l Ammoniumheptamolybdat, 2 g/l Ammoniummonovanadat in 30%iger Schwefelsäure,. Als Nullwert der Messung wurde die unbehandelte Wasserprobe verwendet. Es ergab sich eine Extinktion von 0,220. Der Wert lag also zu niedrig. Ursache ist, dass bereits die Zugabe der Färbekomponente die Extinktion um ca. 0,04 senkt.

### Beispiel 2

Eine Wasserprobe aus dem Belebungsbecken einer kommunalen Kläranlage mit einem Volumen von 2 ml wurde filtriert und mit 0,1 ml 30%iger Schwefelsäure versetzt. Die Probe wurde mit einem Photometer bei 370 nm gemessen und der entsprechende Wert wurde als Nullpunkt verwendet.

Anschließend erfolgte der Zusatz von 0,02 ml einer Färbungskomponente, enthaltend 30 g/l Ammoniumheptamolybdat, 2 g/l Ammoniummonovanadat und 10 ml/l Schwefelsäure. Nach einer Wartezeit von 4 Minuten wurde erneut bei 370 nm gemessen. Als Extinktion ergab sich ein Wert von 0,180. Aus dem Vergleich mit einer kalibrierten Probe konnte der Phosphatgehalt ermittelt werden.

### Vergleichsbeispiel 2

Die gleiche Wasserprobe wurde mit einer Färbungsreagenzmenge wie im Vergleichsbeispiel 1 von 0,1 ml versetzt. Aufgrund der starken Eigenfärbung des Färbungsreagenzes resultiert ein höherer Extinktionswert, hier 0,250. Aus dem Vergleich mit einer kalibrierten Probe kommt nun ein ähnlicher Messwert wie bei der kleineren Zugabemenge 0,02 ml heraus. Aufgrund von Dosierschwankungen bei größerer Reagenz-Zugabemenge ist dieser Messwert nun einer größeren Schwankungsbreite ausgesetzt. Kleinste Nachweisgrenzen (LOD; low detection limit) können bei größeren Reagenz-Zugabemengen nicht erfüllt werden.

## Patentansprüche

1. Verfahren zur Phosphatbestimmung in einer Wasserprobe, umfassend die Schritte:
a) Bereitstellen einer Wasserprobe,
b) Zugabe einer Säure, derart, dass die Konzentration der Säure in der Wasserprobe mindestens 0,5 Gew.-% beträgt,
c) erste photometrische Messung der Wasserproben-Lösung,
d) Zugabe einer Färbungskomponente in die photometrische Wasserproben-Lösung,
wobei die Färbungskomponente 0,1 bis 3 Gew.-% einer Säure enthält, und
wobei die Säurekonzentrationserhöhung in der Wasserprobe durch die Zugabe der Säure mindestens 3 mal höher ist als durch die Zugabe der Färbungskomponente,
e) zweite photometrische Messung, und
f) Berechnung der Phosphatkonzentration aus der Differenz der ersten und der zweiten photometrischen Messung.

2. Verfahren nach Anspruch 1, wobei die Wasserprobe eine Abwasserprobe oder eine Industriewasserprobe ist.

3. Verfahren nach einem der Ansprüche 1 oder 2, wobei die Säure ausgewählt wird aus Schwefelsäure, Salpetersäure, Salzsäure, einer substituierten Benzensulfonsäure, einer substituierten oder unsubstituierten Essigsäure oder Mischungen davon.

4. Verfahren nach einem der Ansprüche 1 bis 3, wobei die Färbungskomponente ein Reagenz auf Basis von Molybdat und Vanadat ist.

5. Verfahren nach einem der Ansprüche 1 bis 4, wobei die photometrische Messung bei 360 - 400 nm erfolgt.

6. Verfahren nach einem der Ansprüche 1 bis 5, wobei die Menge an Färbungskomponente an die erwartete Konzentration an Phosphat angepasst wird.

7. Verfahren nach einem der Ansprüche 1 bis 6, wobei die Phosphatbestimmung parallel an mehreren Wasserproben erfolgt.

8. Verfahren nach einem der Ansprüche 1 bis 7, wobei Wasserproben semi-kontinuierlich entnommen werden und vermessen werden.

9. Verfahren nach einem der Ansprüche 1 bis 8 wobei zwischen der Zugabe der Färbungskomponente und der zweiten photometrischen Messung eine Zeit von 1 bis 10 Minuten liegt.

10. Verfahren nach einem der Ansprüche 1 bis 9, wobei die Färbungskomponente folgende Zusammensetzung aufweist:
0,04 mol/L - 0,12 mol/L Molybdat (MoO₄²⁻)
0,001 mol/L- 0,01 mol/L Vanadat (VO₃⁻)

## Claims

1. A method for determining phosphate in a water sample, comprising the steps of:
a) providing a water sample,
b) adding an acid in such a way that the concentration of the acid in the water sample is at least 0.5% by weight,
c) first photometric measurement of the water sample solution,
d) adding a colouring component to the photometric water sample solution,
wherein the colouring component contains 0.1 to 3 wt.% of an acid, and
wherein the increase in the acid concentration in the water sample due to the addition of the acid is at least three times higher than due to the addition of the colouring component,
e) second photometric measurement, and
f) calculation of the phosphate concentration from the difference between the first and second photometric measurements.

2. The method according to claim 1, wherein the water sample is a waste water sample or an industrial water sample.

3. The method according to one of claims 1 or 2, wherein the acid is selected from sulfuric acid, nitric acid, hydrochloric acid, a substituted benzenesulfonic acid, a substituted or unsubstituted acetic acid, or mixtures thereof.

4. The method according to one of claims 1 to 3, wherein the colouring component is a reagent based on molybdate and vanadate.

5. The method according to one of claims 1 to 4, wherein the photometric measurement is carried out at 360-400 nm.

6. The method according to one of the claims 1 to 5, wherein the amount of colouring component is adjusted to the expected concentration of phosphate.

7. The method according to one of the claims 1 to 6, wherein the phosphate determination is carried out in parallel on several water samples.

8. The method according to one of the claims 1 to 7, wherein water samples are semi-continuously taken and measured.

9. The method according to one of the claims 1 to 8, wherein a time of 1 to 10 minutes elapses between the addition of the colouring component and the second photometric measurement.

10. The method according to one of the claims 1 to 9, wherein the colouring component comprises the following composition:
0.04 mol/L - 0.12 mol/L molybdate (MoO42-)
0.001 mol/L - 0.01 mol/L vanadate (VO3-)

## Revendications

1. Méthode de détermination du phosphate dans un échantillon d'eau, comprenant les étapes consistant à :
a) fourniture d'un échantillon d'eau,
b) ajout d'un acide de telle sorte que la concentration de l'acide dans l'échantillon d'eau soit d'au moins 0,5 % en poids,
c) première mesure photométrique de la solution de l'échantillon d'eau,
d) ajout d'un composant de coloration à la solution d'échantillon d'eau photométrique,
le composant colorant contenant de 0,1 à 3 % en poids d'un acide, et
dans lequel l'augmentation de la concentration en acide dans l'échantillon d'eau due à l'ajout de l'acide est au moins 3 fois supérieure à celle due à l'ajout du composant colorant,
e) une deuxième mesure photométrique, et
f) calcul de la concentration en phosphate à partir de la différence entre la première et la deuxième mesure photométrique.

2. Méthode selon la revendication 1, dans laquelle l'échantillon d'eau est un échantillon d'eau usée ou un échantillon d'eau industrielle.

3. Méthode selon l'une des revendications 1 ou 2, dans laquelle l'acide est choisi parmi l'acide sulfurique, l'acide nitrique, l'acide chlorhydrique, un acide benzène sulfonique substitué, un acide acétique substitué ou non substitué, ou leurs mélanges.

4. Méthode selon l'une quelconque des revendications 1 à 3, dans laquelle le composant colorant est un réactif à base de molybdate et de vanadate.

5. Méthode selon l'une quelconque des revendications 1 à 4, dans laquelle la mesure photométrique est effectuée à 360 - 400 nm.

6. Méthode selon l'une des revendications 1 à 5, dans laquelle la quantité de composant colorant est adaptée à la concentration attendue en phosphate.

7. Méthode selon l'une des revendications 1 à 6, dans laquelle le dosage des phosphates est effectué en parallèle sur plusieurs échantillons d'eau.

8. Méthode selon l'une des revendications 1 à 7, dans laquelle des échantillons d'eau sont prélevés et mesurés de manière semi-continue.

9. Méthode selon l'une des revendications 1 à 8, dans laquelle un temps de 1 à 10 minutes s'écoule entre l'addition du composant colorant et la deuxième mesure photométrique.

10. Méthode selon l'une des revendications 1 à 9, dans laquelle le composant de coloration comprend la composition suivante :
0,04 mol/L - 0,12 mol/L de molybdate (MoO42-)
0,001 mole/L- 0,01 mole/L de vanadate (VO3-)
